# EUROPEAN PATENT APPLICATION

(11) **EP 4 678 925 A1**
(43) Date of publication of application: **14.01.2026**
(21) Application number: 24188028.5
(22) Date of filing: 11.07.2024
(51) Int. Cl.: F16B 2/22, B60R 13/02, F16B 5/06, F16B 5/12, F16B 21/07

(54) **METHOD, FASTENING ARRANGEMENT AND FASTENING CLIP**

(71) Applicant: Newfrey LLC, New Britain, CT 06053 (US)
(72) Inventor: ROSEMANN, Frank, 35394 Gießen (DE); KEMPF, Christian, 35394 Gießen (DE)
(74) Representative: SBD IPAdmin

(57) **Abstract**

Method, fastening arrangement and fastening clip (10) for fastening a first component (12) to a second component (14) comprising a support element (16), a junction element (18), and an inner element (20). The support element (16) comprises holding means (22) adapted to receive a module (24), and a hole (26) adapted to receive the inner element (20). The inner element (20) is movably connected to the support element (16) by the junction element (18) between a disassembled position and a plurality of assembled position and comprises a recess (28) adapted to receive and clamp the head of a stud.

## Description

The present invention relates to a fastening clip which can be used, for example, to attach an add-on part (module) to a vehicle, a fastening arrangement comprising the fastening clip, a module and a stud arranged on a workpiece and a method for assembling such fastening clip. The fastening clip may be used for example to attach a loudspeaker to the structure of a vehicle. However, other applications are possibles, such as interior door trims, brake lights, ... The fastening clip is for instance a removable module holder with a height and a position tolerance compensation.

A plurality of different constructions of fastening clips is known in the prior art. In addition to connecting a plurality of components, these fastening clips frequently also fulfil additional functions. These functions include dampening the connection between two components, displaying the produced connected state, or securing the connection against undesired release.

DE102009016755 for instance discloses a fastening clip and a method for fastening a vehicle part to a vehicle. The vehicle part is fastened to a body part of the vehicle by a first fastening means having a receptacle. The first fastening means are arranged to be locked to a second fastening means having a bulge (which is for instance a stud with a ball head). The bulge is received by the receptacle, and an adjustment occurs between the second and first fastening means by rotation. Such fastening clip comprises several loose parts.

It is the object of the present invention to provide a fastening device with which a vehicle part can be attached to a vehicle easily, quickly and in a reliable way.

The above object may be achieved by a fastening clip according to claim 1. More particularly, the fastening clip for fastening a first component to a second component comprises a support element, a junction element, and an inner element, wherein the support element comprises holding means adapted to receive a module, and a hole adapted to receive the inner element, wherein the inner element is movably connected to the support element by the junction element and comprises a recess adapted to receive and clamp the head of a stud.

Such fastening clip may be assembled automatically without additional tool or unnecessary steps. The assembly is carried out in one step. The assembly and removing of the fastening clip is not destructive, such that the fastening clip can be easily disassembled and re-used as often as necessary.

According to an embodiment, said fastening clip has an integral structure. There are no loose parts.

According to an embodiment, the junction element comprises of at least one spring loop having a first end connected to the support element and a second end connected to the inner element. The inner element is easily positioned with regard to the support element thanks to the spring loop.

According to an embodiment, the junction element comprises two spring loops arranged opposite each other. The inner element can easily be positioned. There is a lower risk of assembly errors or misalignment.

According to an embodiment, the support element has a U-shape with a first and a second wall extending substantially parallel to each other and an intermediate wall extending between the first and second walls. The support element can easily be connected to and adapt to a module thanks to the U-shape.

According to an embodiment, the first and/or the second wall is provided with the hole.

According to an embodiment, at least one elastic tongue extends from the first and/or the second wall. The elastic tongue allows for tolerance compensation.

According to an embodiment, the inner element is slidably movable with regard to the support element. The engagement between the inner element and the support element is realized with a translation, which can be easily performed by a user or an automatic tool.

According to an embodiment, the inner element comprises a guiding portion adapted to slide within the hole, wherein the guiding portion is formed by the lateral walls of the recess.

According to an embodiment, gripping fingers are provided within the recess. The gripping fingers are adapted to snap fit for example a bulge or the head or a ball head of a stud.

The present disclosure is also directed to a fastening arrangement comprising a fastening clip as disclosed above, a workpiece with a stud fastened to the workpiece, the stud comprising a head, and wherein the head of the stud is removably arranged within the recess.

According to an embodiment, a module is connected to the support element. According to an embodiment, the support element comprises a support aperture and the module is arranged in the support aperture. Thus, the fastening clip allows to assembly of the workpiece with the module, the workpiece being connected to the inner element through the stud and the module being connected to the support element.

The present disclosure is finally directed to a method for fastening a workpiece to a module comprising the steps of:
- Providing a workpiece with a stud fastened to the workpiece, the stud comprising a head,
- Providing a module,
- Providing a fastening clip as described above, wherein the inner element is at a non-zero distance from the support element in a disassembled position,
- Inserting the module within a support aperture of the support element,
- Arranging the fastening clip with the module on the stud such that the stud is arranged in the hole,
- Pushing the inner element toward the hole such that the head of the stud is introduced within the recess of the inner element.

The connection between the module and the workpiece which can be for example a vehicle part and a body part of the vehicle is easily realized. No further tool is needed.

According to an embodiment, the position of the inner element with regard to the support element in an assembled position of the fastening clip can be adjusted depending on the height of the stud. Thus, the fastening clip can be easily adjusted to different studs.

Other characteristics and advantages of the invention will readily appear from the following description of embodiments, provided as non-limitative examples, in reference to the accompanying drawings:
Fig. 1 shows a cross-sectional side view of the fastening clip according to the invention comprising a support element, a junction element and an inner element, wherein the inner element is in a disassembled position, and a module is connected to the support element;
Fig. 2A shows a side view of the fastening clip of Fig. 1 with the module connected to the support element, the junction element being partially hidden;
Fig. 2B shows a side view of the fastening clip of Fig. 1 alone;
Fig. 3 shows a top view of the fastening clip of Fig. 1;
Fig. 4 shows a workpiece provided with a stud and the fastening clip of Fig. 1 with the module;
Fig. 5A shows a perspective view the fastening clip of Fig. 1 with the inner element in a disassembled position;
Fig. 5B shows a cross-sectional view of a fastening arrangement with a module, a workpiece and the fastening clip of Fig. 1 with the inner element in an assembled position.

On the different figures, the same reference signs designate identical or similar elements.

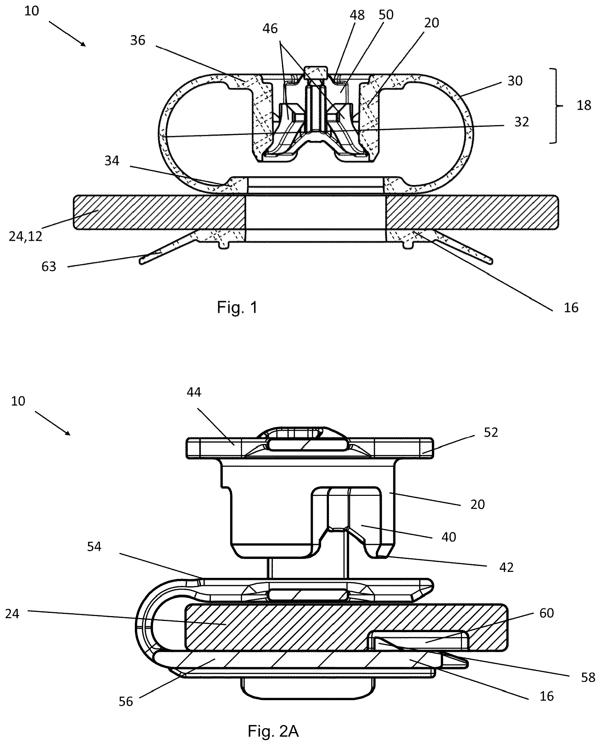

Fig. 1 shows a fastening clip 10 comprising a support element 16, a junction element 18, and an inner element 20. The fastening clip 10 is for instance integrally made (there are no separate or detachable parts). The fastening clip is for instance made of plastic material.

The junction element 18 flexibly connects the support element 16 and the inner element 20. The junction element 18 comprises for instance at least one spring loop 30, 32 having a first end connected to the support element 16 and a second end connected to the inner element 20. More particularly, as depicted in Fig. 1, the junction element 18 comprises two spring loops 30, 32 arranged opposite each other. Each of the spring loops 30, 32 comprises a first end 34 connected to the support element 16 and a second end 36 connected to the inner element 20. The arrangement of the spring loops 30, 32, opposite to each other, allows a better access to the support element and the inner element. However, in an embodiment (not shown), only one spring loop may be provided to connect the inner element to the support element. In an alternative embodiment, the junction element 18 may be any kind of connector adapted to connect the inner element to the support element.

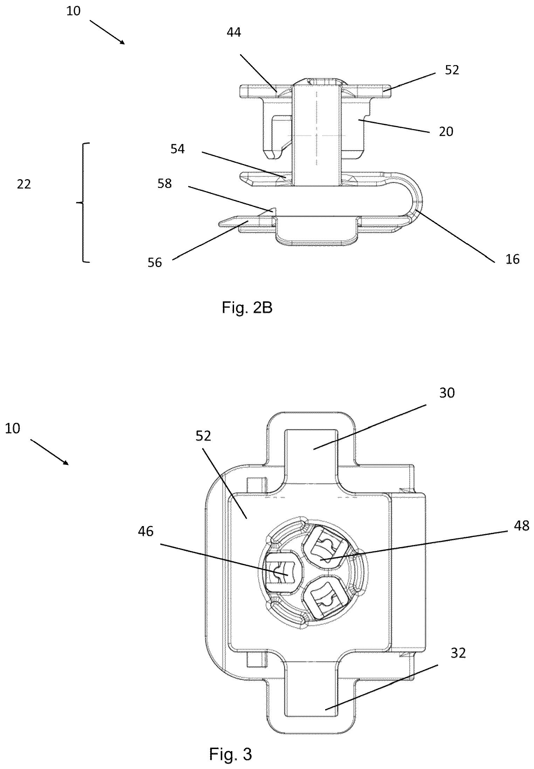

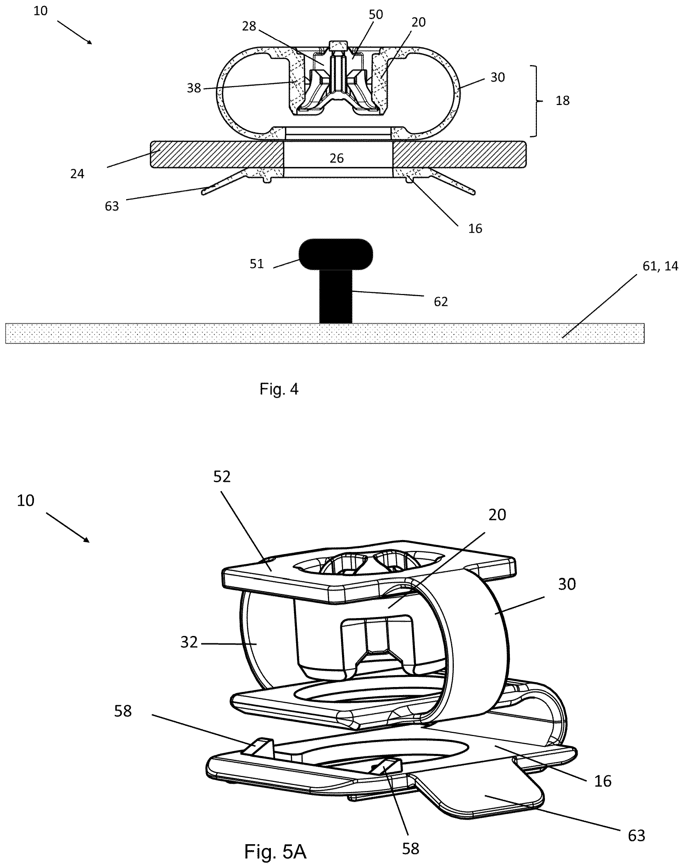

The inner element comprises a recess 28. The recess 28 is a central recess for instance. The recess 28 is a through hole defined by a lateral wall 38. The lateral wall 38 has an inner surface surrounding the recess 28 and an outer surface opposite the inner surface. Notches 40 may be provided on the outer surface. The lateral wall 38 has for instance a cylindrical shape (or barrel-like shape). The base 42 of the lateral wall 38 is in the vicinity of the support element 16, wherein the top 44 of the lateral wall 38 is opposite the base 42. Gripping fingers 46 may extend inside the recess 28. As visible more particularly in Fig. 3 or Fig. 4, three gripping fingers 46 may be arranged within the recess 28. For instance, the gripping fingers 46 protrudes from the lateral wall 38 defining the recess 28. Each gripping finger46 may have a first end connected to the lateral wall 38 and a second end, which is a free end extending within the recess 28. The top 44 of the recess 28 may be provided with protrusions or an abutment portion 48 (as seen in Fig. 3) facing the second free end of the gripping fingers 46. For instance a gap 50 adapted to receive and clamp the head of a stud or a bulge 51 is arranged between the second end of the gripping fingers 46 and the protrusions or abutment portion 48. A flange 52 extends for instance radially from the top of the lateral wall 38. The junction element 18 (or more particularly a second end of the spring loops 30, 32) is fixed to the flange 52.

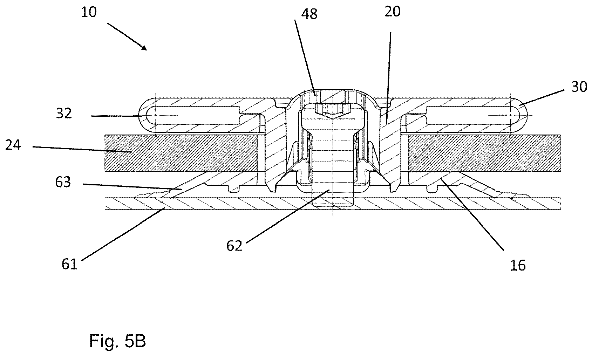

The inner element 20 is movably connected to the support element 16 by the junction element 18. More particularly the inner element 20 is movable between one or a plurality of disassembled positions and one or a plurality of assembled positions. In the disassembled positions, the inner element 20 (and more particularly the base of the lateral wall) is at a non-zero distance from the support element 16. In the assembled positions, the inner element 20 is at least partly arranged into a hole 26 of the support element 16. Fig. 5A shows the inner element 20 in a disassembled position, wherein Fig. 5B shows the inner element 20 in an assembled position.

The support element 16 comprises holding means 22 adapted to receive a module 24. The support element further comprises the hole 26. The hole 26 has dimensions allowing the inner element 20 to be inserted into said hole 26 (more particularly, the body of the inner element with the lateral wall can be inserted into the hole). For instance, the support element 16 comprises a U-shaped body with a first wall 54 and a second wall 56 extending substantially parallel to each other. The first and second walls 54, 56 are connected together through an intermediate portion. The holding means 22 can be formed by the first and second walls 54, 56. For instance, when inserted between the first and second walls 54, 56, the module 24 can elastically deform the support element such that a clamping force is applied to the module by the first and second walls 54, 56. The first and second walls 54, 56 define an aperture and a tongue 58 may extend from the first or the second wall (see Fig. 2A) into the aperture to better clamp or snap fit the module 24 (as depicted in Fig. 2B). The holding means 22 can be formed by the first and second walls 54, 56 and the tongue 58. For instance, the module 24 comprises a module notch 60 adapted to receive the tongue 58 and stop the module 24 with regard to the support element 16 in the plane, and more particularly into the aperture defined by the first and second walls 54, 56 (as seen in Fig. 2A). More particularly, a snap fit connection may be provided between the module 24 and the support element 16 through the tongue and the module notch 60. The cooperation of the module notch with the tongue allows also an alignment of the module with regard to the support element and the hole 26, such that a module hole is aligned with the hole 26 of the fastening clip 10. Another function of the tongue 58 is a height adjustment. Indeed, the tongue 58 allows variation in the module 54 thickness, such that when the thickness of the module is smaller than the distance between the first and second walls 54, 56, the tongue 58 may ensure alone the holding function. As seen for instance in Fig. 5A, two tongues 58 may be provided. The two tongues 58 cooperate with two module notches 60.

The hole 26 is a through hole and goes through the first and the second wall 54, 56. The first wall 54 faces the inner element 20. In other words, the first wall 54 is arranged between the second wall 56 and the inner element 20. The junction element 18 is connected to the edge of the first wall 54. More particularly a first end of the spring loops 30, 32 is connected to the edge of the first wall. The second wall 56 is provided with at least one elastic tongue 63. More particularly, two elastic tongues 62 extend from the edge of the second wall 56.

The fastening clip 10 is adapted to fasten a vehicle part to a body of a vehicle. For instance, the fastening clip 10 is adapted to fasten a module 24 to a workpiece 61 provided with a stud 62 having a head, a ball head or a bulge 51.

The assembly of the fastening clip 10 is as follows.

At the beginning the fastening clip 10 is provided with the inner element in a disassembled position, as visible in Fig. 5A.

In a first step, the inner element 20 remains in the disassembled position (the barrel-like body is not inserted into the hole) and the module 24 is fixed to the support element 16 (as visible in Fig. 1, 2A., 4). More particularly the module 24 is inserted between the first and second walls 54, 56. The tongue 58 cooperate with the module notch 60 for holding and aligning the module 24 with regard to the hole 26. As mentioned above, the module comprises a module hole which is aligned with the hole 26 through the module notch 60 and the tongue 58 when the module 24 is connected to the support element 16.

In a second step, a workpiece 61 is provided. A stud 62 is fixed to the workpiece 61. For instance, the stud can be welded or glued or... The stud 62 comprises a bulge or a head 51 adapted to cooperate with the recess 28 inner element 20. As depicted schematically in Fig. 4, the fastening clip 10 with the module 24 is inserted over the stud 62 such that the shaft of the stud is arranged in the hole (the module having also a module hole aligned with the hole with the support element), and the head or bulge 51 protrudes from the first wall 54 of the support element 16.

In a third step, the inner element 20 is pushed against the head 51 such that the head (or bulge) is inserted into the recess. The inner element 20 is pushed further until the head or bulge abuts against the protrusions 48 at the top of the recess and is clamped or snap fitted or held within the gap 50 by the gripping fingers 46. When pushed against the head 51, the inner element 20 at least partially penetrates the hole 26. The lateral wall 38 of the inner element forms a guiding portion for the inner element into the hole 26. Fig. 5B shows the fastening clip 10 being entirely assembled to the workpiece and the module.
fastening clip 10
first component 12
second component 14
support element 16
junction element 18
inner element 20
holding means 22
module 24
hole 26
recess 28
spring loop 30, 32
first end 34
second end 36
lateral wall 38
Notches 40
base 42
top 44
gripping fingers 46
protrusions or an abutment portion 48
gap 50
head, a ball head or a bulge 51
flange 52
first and second walls 54, 56
tongue 58
module notch 60
workpiece 61
stud 62
elastic tongue 63

## Claims

1. Fastening clip (10) for fastening a first component (12) to a second component (14) comprising:
- a support element (16),
- a junction element (18), and
- an inner element (20),
wherein
the support element (16) comprises holding means (22) adapted to receive a module (24), and a hole (26) adapted to receive the inner element (20),
wherein the inner element (20) is movably connected to the support element (16) by the junction element (18) between a disassembled position and a plurality of assembled position and comprises a recess (28) adapted to receive and clamp the head of a stud.

2. Fastening clip (10) according to claim 1, wherein said fastening clip (10) has an integral structure.

3. Fastening clip (10) according to claim 1 or 2, wherein the junction element (18) comprises at least one spring loop (30, 32) having a first end connected to the support element (16) and a second end connected to the inner element (20).

4. Fastening clip (10) according to any of claims 1 to 3, wherein the junction element (18) comprises two spring loops (30, 32) arranged opposite each other.

5. Fastening clip (10) according to any of claims 1 to 4, wherein the support element (16) has a U-shape with a first and a second wall (54, 56) extending substantially parallel to each other and an intermediate wall extending between the first and second walls.

6. Fastening clip (10) according to claim 5, wherein the first and/or the second wall is provided with the hole (26).

7. Fastening clip (10) according to claim 5 or 6, wherein at least one tongue (58, 63) extends from the first and/or the second wall.

8. Fastening clip (10) according to any of claims 1 to 7, wherein the inner element (20) is slidably movable with regard to the support element.

9. Fastening clip (10) according to any of claims 1 to 8, wherein the inner element (20) comprises a guiding portion adapted to slide within the hole, wherein the guiding portion is formed by the lateral wall (38) of the recess (28).

10. Fastening clip (10) according to any of claims 1 to 9, wherein gripping fingers (46) are provided within the recess (28).

11. Fastening arrangement comprising a fastening clip (10) according to any of claims 1 to 10, a workpiece (61) with a stud (62) fastened to the workpiece, the stud comprising a head (51), and wherein the head (51) of the stud is removably arranged within the recess (28).

12. Fastening arrangement according to claim 11, wherein a module (24) is connected to the support element (16).

13. Fastening arrangement according to claim 12, wherein the support element (16) comprises a support aperture and the module is arranged in the support aperture.

14. Method for fastening a workpiece to a module (24) comprising the steps of:
- Providing a workpiece (61) with a stud (62) fastened to the workpiece, the stud comprising a head (51),
- Providing a module (24),
- Providing a fastening clip (10) according to any of claims 1 to 10, wherein the inner element (20) is at a non-zero distance from the support element in a disassembled position,
- Inserting the module within a support aperture of the support element,
- Arranging the fastening clip with the module on the stud such that the stud is arranged in the hole,
- Pushing the inner element toward the hole such that the head of the stud is introduced within the recess of the inner element.

15. Method according to claim 14, wherein the position of the inner element with regard to the support element in an assembled position of the fastening clip (10) can be adjusted depending on the height of the stud (62).
